# EUROPÄISCHE PATENTANMELDUNG

(11) **EP 0 628 932 A1**
(43) Veröffentlichungstag der Anmeldung: **14.12.1994**
(21) Anmeldenummer: 94107947.7
(22) Anmeldetag: 24.05.1994
(51) Int. Cl.: G07F 7/06, E05B 35/00, G07F 17/12

(54) **Karte für ein Pfandschloss**

(30) Priorität: 04.06.1993 DE 4318627; 08.12.1993 DE 4341792
(71) Anmelder: VENDORET HOLDING S.A., L-5801 Luxemburg-Hesperange (LU)
(72) Erfinder: Horst, Merchel, D-74321 Bietigheim-Bissingen (DE)
(74) Vertreter: COHAUSZ HASE DAWIDOWICZ & PARTNER

(57) **Zusammenfassung**

Die Erfindung betrifft ein Pfandschloß für lösbar aneinander zu befestigende Teile, wie Einkaufswagen und Gepäckwagen mit einem am ersten Teil befestigten Schloßgehäuse 1, daß eine Öffnung 1b, für ein Pfand und eine Öffnung 1a für ein Kopplungsglied besitzt, das am zweiten Teil befestigt ist und so lange durch einen Schließriegel arretiert gehalten ist, bis das Pfand eingeschoben ist, wobei das Pfand eine Karte ist, die während des Einschiebens ein Steuerteil 3 bewegt, das den Schließriegl 4 von der sperrenden in die entsperrte Stellung bewegt, wobei die Karte mindestens einen ersten Bereich aufweist, der durch einen in den Kartenschiebeweg hineinragenden Vorsprung 14 des Schlosses gegenüber dem übrigen zweiten Kartenbereich aus der Kartenebene ausbiegbar ist, wobei dieser erste Bereich im ausgebogenen Zustand direkt oder über ein Zwischenteil gegen einen Anschlag 3d des Steuerteils stößt, um das Steuerteil zu bewegen.

## Beschreibung

Die Erfindung betrifft eine Karte für ein Pfandschloß für lösbar aneinander zu befestigende Teile, wie Einkaufswagen oder Gepäckwagen.

Eine solche Karte für ein Pfandschloß ist in der vorangemeldeten nachveröffentlichten Patentanmeldung DE 42 29 332 beschrieben. Hierbei ist es wichtig, daß das Schloß nicht jede Karte akzeptiert, sondern nur durch bestimmte Karten das Kopplungsglied entsperrbar ist.

Aufgabe der Erfindung ist es, ein Pfandschloß der eingangs genannten Art so zu verbessern, daß aufgrund der bestimmmten Form bzw. Ausgestaltung der konstruktiv einfachen Karte das Kopplungsglied entsperrbar ist.

Diese Aufgabe wird erfindungsgemäß dadurch gelöst, daß die Kartenfläche und/oder der Kartenrand mindestens eine Erweiterung, insbesondere einen Vorsprung und/oder mindestens eine Reduzierung, insbesondere eine Ausnehmung aufweist, durch die/den das Schloß betätigbar und/oder durch die/den die Karte prüfbar ist.

Durch die Erweiterung und/oder Reduzierung in einem bestimmten kleinen oder großen Bereich der Karte kann nur durch eine in dieser Weise gestaltete Karte das Schloß betätigt werden. Dies kann zum einen dadurch geschehen, daß der verformte oder unverformt gebliebene Bereich das Kopplungsglied direkt oder über Zwischenteile entsperrt. Zum anderen kann es aber auch dadurch erfolgen, daß nur eine richtig ausgeführte Karte in das Schloß einsteckbar ist, und durch die Einsteckbarkeit erst ein Entsperren möglich wird. Hierbei sind Schloß und Karte von einfachster Konstruktion und kleinen Außenabmessungen. Auch wird eine hohe Funktionstüchtigkeit und Sicherheit und einfache Handhabung erreicht.

Vorteilhafte Ausgestaltungen der Karte und eines Schlosses sind in den Unteransprüchen aufgeführt.

Ausführungsbeispiele der Erfindung sind in den Zeichnungen dargestellt und werden im folgenden näher beschrieben. Es zeigen:
- Figur 1:: Eine Karte größerer Dicke.
- Figur 2:: Eine Karte geringerer Länge.
- Figur 3:: Eine Karte geringerer Breite.
- Figur 4:: Eine Karte mit abgeschrägter Ecke.
- Figur 5:: Eine Karte mit zwei stark abgerundeten Ecken.
- Figur 6:: Eine Karte mit abgeschrägter Längsseite.
- Figur 7:: eine Karte mit stirnseitiger Randkontur.
- Figur 8:: Eine Karte mit stirnseitiger Randlochung.
- Figur 9:: Eine Karte mit Vorsprüngen am stirnseitigen Rand.
- Figur 10:: Eine Karte mit Lochung am Längsrand.
- Figur 11:: Eine Karte mit Rücksprügen am Längsrand.
- Figur 12:: Eine Karte mit rauhem Längsrand.
- Figur 13:: Eine Karte mit Öffnung (Loch) in der Seitenfläche.
- Figur 14:: Eine Karte mit Erhebung oder Vertiefung in der Seitenfläche.
- Figur 15:: Eine Karte mit Zahnung in der Seitenfläche.
- Figur 16:: Eine Karte mit geprägter Schrift.
- Figur 17:: Eine Karte mit Lochreihe in der Seitenfläche.
- Figur 18:: Eine Karte mit Vertiefungsreihe in der Seitenfläche.
- Figur 19:: Eine Karte mit Rechtecklochreihe in der Seitenfläche.
- Figur 20:: Eine Karte mit einer Reihe länglicher Vertiefungen in der Seitenfläche.
- Figur 21:: Eine Karte mit geformter Längskante und
- Figur 22:: eine Karte mit geprägtem Wulst auf der Seitenfläche.

Das nicht dargestellte Pfandschloß weist ein Gehäuse auf, mit einem seitlich in der Gehäusewand angeordnetem Schlitz, durch den eine Karte 1 als Pfand einschiebbar ist. Zusätzlich zu dem Schlitz für die Karte kann noch ein weiterer Schlitz angeordnet sein, durch den eine Münze als Pfand alternativ eingeschoben wird.

Beim Einschieben einer passenden Karte wird durch die Karte ein Steuerteil bewegt, der einen Schließriegel entriegelt, der ein Kopplungsglied eines benachbarten Einkaufswagens freigibt. Sobald also die Karte in das Schloß des ersten Wagens eingeschoben ist, wird das Kopplungsglied des benachbarten Wagens gelöst und es kann der Einkaufswagen entnommen werden. Die genaue Konstruktion und Funktion des Schlosses ist als Ausführungsbeispiel in der nicht vorveröffentlichen deutschen Patentanmeldung
P 43 18 627.0 beschrieben. Das Schloß ist entweder am Handgriff eines Einkaufswagens, an einer Handgriffstrebe oder am Wagenkorb befestigt.

Die im folgenden beschriebenen unterschiedlichen Ausführungen der Karte dienen wahlweise zwei unterschiedlichen Funktionen:
1. In einer ersten Ausführungsart ist die Karte so geformt, das sie nur bei richtiger Ausführung in den Schlitz einschiebbar oder genügend tief einschiebbar ist, um durch das Einschieben, bzw. genügend tiefe Einschieben in das Schloß die Sperre des Kopplungsgliedes zu lösen.
2. In einer zweiten Anwendung dient die spezielle Ausführung der Karte nicht dazu, die Karte in ihrem Einschieben zu hindern.

Vielmehr kann auch eine falsche Karte bis zum Ende eingeschoben werden. Die falsche Karte löst aber nicht die Arretierung, d.h. nur eine Karte mit der richtigen Ausführung löst mit der speziellen richtigen Kartenkonstruktion, z.B. durch eine an der richtigen Stelle angeordneten Vorsprung der Karte, das Schloß aus, d.h. es führt zu einer Entriegelung des Kopplungsgliedes.

Alle im folgenden beschriebenen Kartenkonstruktionen bzw. Kartenausführungen können stets der einen oder anderen Funktion dienen. Darüberhinaus ist dafür zu sorgen, daß eine in das Schloß eingesteckte Karte nach dem Entriegeln des Kopplungsgliedes im Schloß festgehalten wird. Hierfür können zusätzliche Konstruktionen, z.B. Löcher in der Karte vorgesehen sein. In vielen Fällen reicht auch die spezielle Konstruktionsart der Karte aus, um diese Konstruktionsart dafür zu nutzen, die Karte im Schloß festzuhalten, bis wieder ein Kopplungsglied eines zweiten Wagens in das Schloß eingesteckt wird.

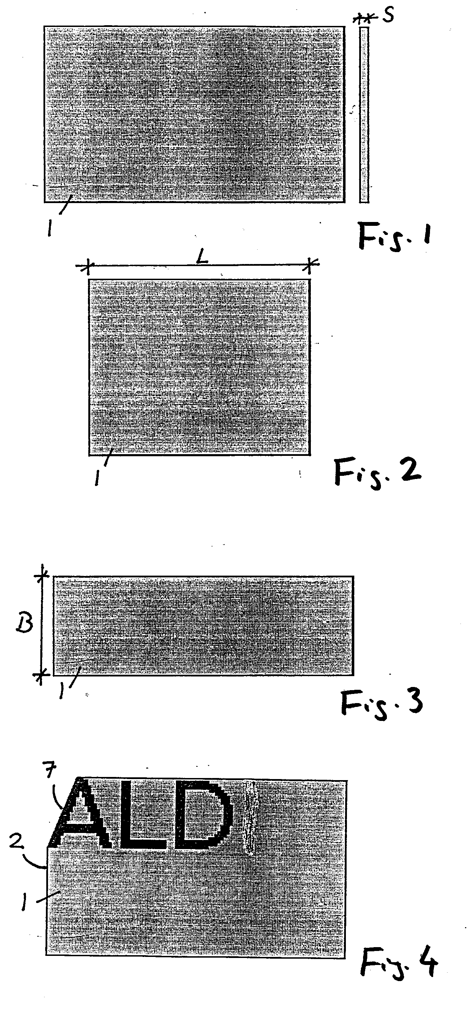

Im folgenden werden die unterschiedlichen Kartenkonstruktionen einzeln beschrieben, wobei auch zwei oder mehr Konstruktionsarten an einer einzigen Karte vorhanden sein können:
Die Karte 1 nach Figur 1 weist eine Dicke (Stärke) S auf, die dünner oder dicker ist als eine übliche Kredit- oder Telefonkarte, wobei diese Kartenstärke im Schloß abgetastet wird und nur eine Karte in der richtigen Stärke vom Schloß akzeptiert wird. Bei einer dünneren Karte als üblich kann dies allein dadurch geschehen, daß der Schlitz des Schlosses so dünn ausgeführt ist, daß üblich dicke Karten nicht eingeschoben werden können. Bei einer wesentlich dickeren Karte als die bekannten Karten kann das Abtasten, bzw. Prüfen dadurch geschehen, daß aufgrund der größeren Dicke nur ein in den Weg hineinragender Bolzen oder Schieber bzw. Hebel von der Karte betätigt wird, während eine dünnere Karte dieses zu bewegende Teil nicht erreicht.

Das Ausführungsbeispiel nach Figur 2 zeigt eine Karte 1 mit geringerer Länge L als üblich, so daß nur diese kurze Karte mit ihrer äußeren Kartenseite genügend tief in das Schloß einsteckbar ist, um einen nahe dem Schloßschlitz angeordneten Hebel zu betätigen. Alternativ kann aber auch die Karte wesentlich länger als die übliche Karte sein, so daß nur eine solch lange Karte tief in dem Schloß den Auslösemechanismus betätigen kann.

Beim Ausführungsbeispiel nach Figur 3 ist die Karte schmaler als üblich, wobei auch der Schlitz eine entsprechende Breite besitzt, so daß nur eine sehr schmale Karte eingeschoben werden kann. Alternativ kann die Karte wesentlich breiter sein und nur aufgrund der größeren Breite den Auslösemechanismus erreichen, wobei vorzugsweise an beiden Sieten des Einführungschachtes des Schlosses ein Raster ist.

Beim Ausführungsbeispiel nach Figur 4 weist die vordere Kante der Karte eine Abschrägung auf, die an ein entsprechendes Gegenstück im Einführungsschacht zur Anlage kommt, so daß nur eine Karte mit einer solchen entsprechenden Abschrägung genügend tief in das Schloß einschiebbar ist und nur bei einem solchen tiefen Hineinschieben mit der vordersten, nicht abgeschrägten Kante 2 das Schloß auslöst.

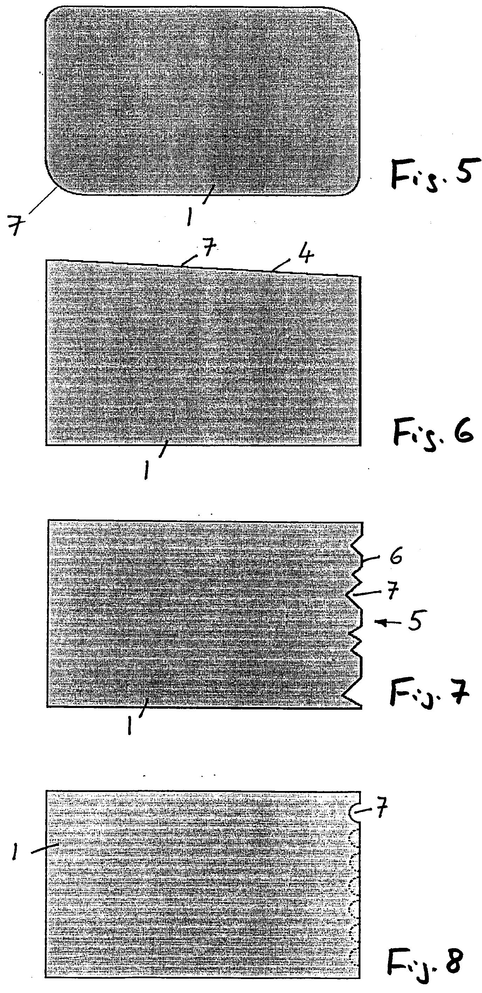

Eine ähnliche Konstruktion zeigt auch die Karte nach Figur 5. Hier weist die Karte eine Abrundung 3 auf, deren Radius größer ist als übliche Abrundungen, wobei die Karte wiederum nur dann genügend tief in den Einführungsschacht des Schlosses eingeschoben werden kann, wenn das zur Abrundung passende Gegenstück an der Abrundung zur Anlage gelangt und damit die Karte tief genug einsteckbar ist.

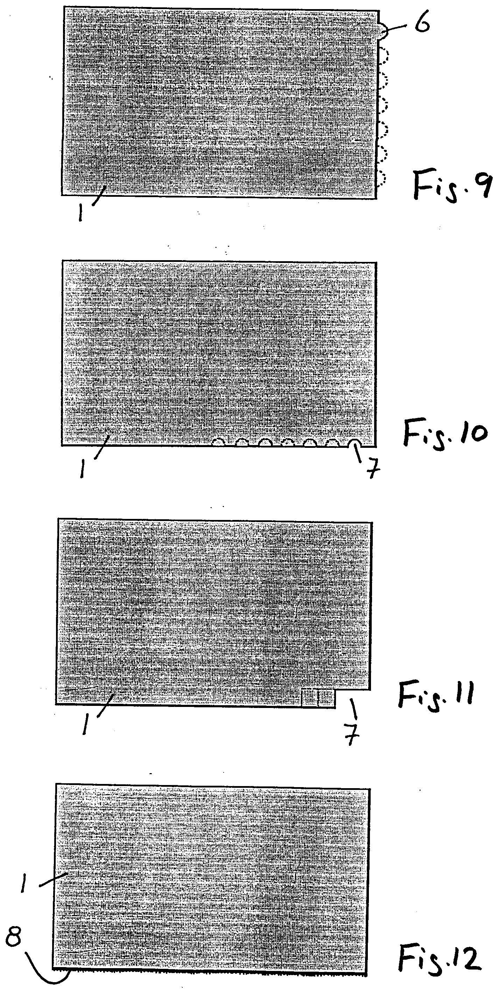

Das Ausführungsbeispiel nach Figur 6 weist eine Längskante, eine Abschrägung 4 auf, und wiederum ist die Karte nur dann genügend tief ein das Schloß einsteckbar, wenn diese Abschrägung vorhanden ist. Eine Karte ohne diese Abschrägung würde dagegen schon nach einem Einstecken von wenigen Zentimetern stecken bleiben.

Beim Ausführungsbeispiel nach Figur 7 weist die vordere Stirnseite, bzw. Kante der Karte 1 eine Profilierung mit Erweiterungen bzw. Vorsprüngen 6 und Reduzierungen, bzw. Ausnehmungen 7 auf, so daß diese vordere Profilierung bzw. Kontur bzw. Kopfseite der Karte zu einem Gegenstück im Schloß passen muß, das entsprechend entgegengesetzt geformt ist. Damit paßt nur eine Karte mit dieser speziellen Kontur weit genug in das Schloß hinein und es kann nur aufgrund diesen genügend tiefen Einsteckens der Karte das Schloß ausgelöst werden.

In gleicher Weise arbeiten auch die Ausführungsbeispiele nach den Figuren 8 bis 11. Die Karte nach Figur 8 weist Ausstanzungen oder Randlochungen auf, die sich nach außen hin öffnen und in die entsprechende Gegenstücke bzw. Vorsprünge im Schloß hineinreichen. Umgekehrt arbeitet die Karte nach Figur 9. Hier weist die vordere Stirnseite Erhebungen auf, die in entsprechende Ausnehmungen im Schloß am Ende eines Einführungsschachtes hineinragen. Wie auch schon beim Ausführungsbeispiel nach Figur 7 können bei all diesen Ausführungsbeispielen nach Figuren 7 bis 11 eine hohe Zahl an alternativen
Formen wie bei dem Bart eines Schlüssels geschaffen werden.

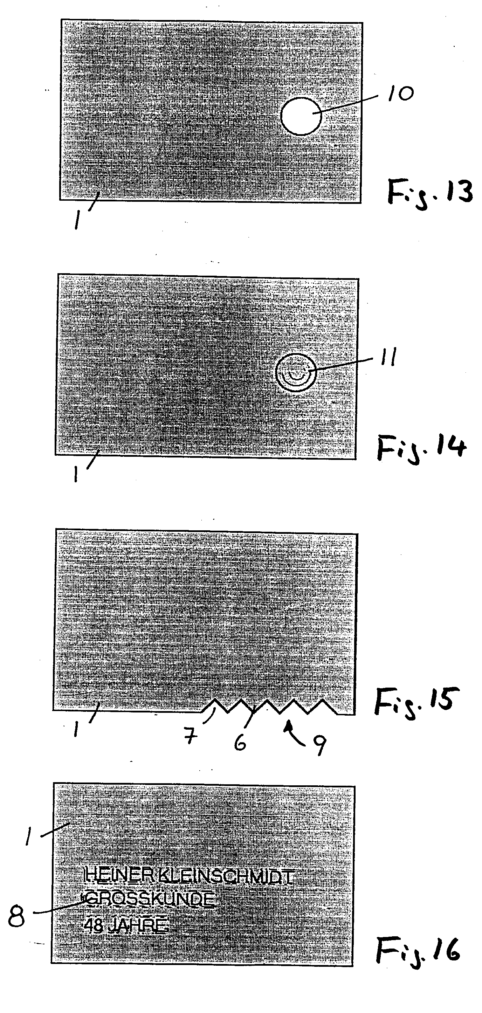

Beim Ausführungsbeispiel nach Figur 10 sind die Ausnehmungen oder Vorsprünge an der Längsseite einer Karte angeordnet. Das Schloß weist entsprechend zumindest an einer Seite des Einführungsschachtes einen Abtaststift, Abtasthebel oder ein anderes Abtastinstrument auf, das in eine oder mehrere Ausnehmungen hineinreicht und nur wenn dies geschieht, ein Lösen des Kopplungsgliedes bewirkt(en). Beim Ausführungsbeispiel nach Figur 11 sind diese Ausnehmungen 7 nicht halbkreisförmig, sondern rechteckig.

Das Ausführungsbeispiel nach Figur 12 weist eine Längskante auf, die eine rauhe Seitenkontur bildet. Diese Seitenkontur läuft innerhalb des Schlosses auf einem Rad oder Trommel bzw. Zylinder ab, so daß beim Einschieben diese Reibrolle verdreht wird und damit ein Entriegeln erzeugbar ist.

Statt einer solchen rauhen Kontur kann aber auch an der Längsseite eine Art Zahnung angeordnet sein, wie dies Figur 15 zeigt. Diese Zahnung bewegt ein Zahnrad innerhalb des Schlosses zum Entriegeln.

In gleicher Weise kann auch mindestens eine Seitenfläche der Karte eine Aufrauhung besitzen, z.B. in Form einer aufgeprägten Schrift, wie dies Figur 16 zeigt. Auch diese Schrift kann eine Reibrolle im Schloß in Drehbewegung setzen, um ein Entriegeln zu erzeugen.

Die Ausführungsbeispiele nach Figur 13, 14 und 17 bis 20 zeigen Ausnehmungen in Form von Öffnungen 10 oder Vertiefungen 11 in unterschiedlichen Formen, Anzahl und Größe. Diese haben aber gemeinsam, daß sie ähnlich wie bereits oben beschrieben zu einem Abtasten dienen, um entweder das Schloß auszulösen oder aber die Richtigkeit der Karte zu bestätigen, so daß nur eine richtige Karte weit genug einschiebbar ist, um ein Auslösen zu erzeugen.

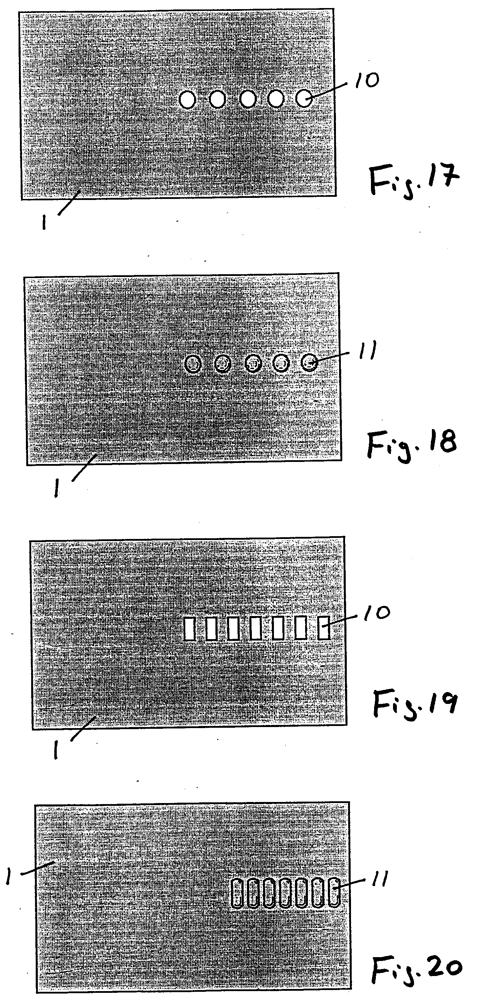

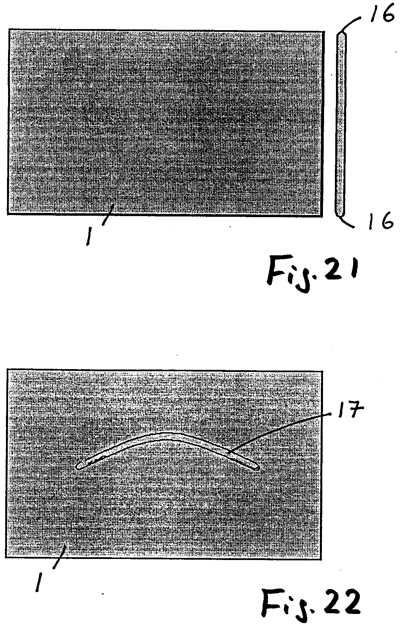

Beim Ausführungsbeispiel nach Figur 13 ist nur eine einzige Öffnung 10 und beim Ausführungsbeispiel nach Figur 14 nur eine einzige Vertiefung 11 angeordnet. Das Ausführungsbeispiel nach Figur 17 weist mehrere Vertiefungen in einer Reihe auf, das Ausführungsbeispiel nach Figur 18 weist mehrere Vertiefungen in einer Reihe und beim Ausführungsbeispiel nach Figur 19 und 20 sind diese Öffnungen bzw. Vertiefungen in länglicher Form.

Beim Ausführungsbeispiel nach Figur 21 weist die Karte 1 an den Längsseiten eine Querschnittskontur 16 auf, die entweder halbrund oder viertelrund sein kann und formschlüssig in in einer entsprechend geformten Abtastkontur an der Längsseite des Einführungsschachtes paßt. Damit kann nur eine an den Seitenrändern richtig geformte Karte in das Schloß eingesteckt werden, bzw. das Schloß auslösen.

Die Karte nach Figur 22 besitzt an einer Seitenfläche eine wulstförmige Erhebung 17, die eine Krümmung besitzt und mit dieser Krümmung gegen das Auslöseteil drückt, um das Kopplungsglied zu entriegeln.

Auf der Karte ist zusätzlich ein Magnetstreifen, durch den Informationen über ein Schreib-/Lesegerät speicherbar und/oder abrufbar sind, das vorzugsweise an der Kasse oder am Eingang/Ausgang eines Geschäftes angeordnet ist.
Durch diesen Magnetstreifen erhält die Karte noch zusätzliche Funktionen. Insbesondere können hierdurch Informationen über den Kunden, den Wagen, und/oder über Waren erhalten werden.

Die Karte kann einen einen elektronischen Chip und/oder eine integrierte Schaltung aufweisen.

## Patentansprüche

1. Karte für ein Pfandschloß, insbesondere eines Einkaufs- oder Gepäckwagens, **dadurch gekennzeichnet,** daß die Kartenfläche und/oder der Kartenrand mindestens eine Erweiterung (6), insbesondere einen Vorsprung und/oder mindestens eine Reduzierung, insbesondere eine Ausnehmung (7, 10, 11) aufweist, durch die/den das Schloß betätigbar und/oder durch die/den die Karte (1) prüfbar ist.

2. Karte nach Anspruch 1, **dadurch gekennzeichnet,** daß mindestens eine Außenabmessung (B, L, S) der Karte (1) von der Außenabmessung einer üblichen (standadisierten) Kredit- oder Telefonkarte abweicht und durch diese Abweichung das Schloß betätigbar oder die Karte in das Schloß einsteckbar ist.

3. Karte nach Anspruch 2, **dadurch gekennzeichnet,** daß sie eine größere und/oder kleinere Länge (L), Breite (B) und/oder Dicke (Stärke) (S) als eine übliche (standardisierte) Kredit - oder Telefonkarte aufweist.

4. Karte nach einem der vorherigen Ansprüche, **dadurch gekennzeichnet,** daß der Kartenrand mindestens eine Abschrägung (7) aufweist.

5. Karte nach einem der vorherigen Ansprüche, **dadurch gekennzeichnet,** daß mindestens eine Kartenrandecke eine Abrundung (7) aufweist, deren Radius größer ist als der einer anderen Ecke, insbesondere einer Ecke einer üblichen (standardisierten) Kredit- oder Telefonkarte.

6. Karte nach einem der vorherigen Ansprüche, **dadurch gekennzeichnet,** daß die Erweiterung und/oder Reduzierung mehrere Erweiterungen (6) (insbesondere Vorsprünge) und/oder Ausnehmungen (7) (insbesondere Rücksprünge) an mindestens einem Kartenrand bilden, die eine abtastbare Kontur sind.

7. Karte nach Anspruch 6, **dadurch gekennzeichnet,** daß die Erweiterungen (6) und/oder Reduzierungen (7) eine Zahnreihe (9) bilden.

8. Karte nach einem der vorherigen Ansprüche, **dadurch gekennzeichnet,** daß ein Kartenrand und/oder eine Kartenfläche eine rauhe Kontur (8) bilden.

9. Karte nach Anspruch 8, **dadurch gekennzeichnet,** daß die rauhe Kontur von einer Mehrzahl von Vorsprüngen und/oder Ausnehmungen besteht.

10. Karte nach Anspruch 8, **dadurch gekennzeichnet,** daß die Vorsprünge und/oder Ausnehmungen eine Reihe eingeprägter, eingestanzter oder erhabener Zeichen, insbesondere Buchstaben und/oder Zahlen sind.

11. Karte nach einem der vorherigen Ansprüche, **dadurch gekennzeichnet,** daß die Reduzierungen bzw. Ausnehmungen (7) Löcher oder Vertiefungen sind.

12. Karte nach einem der vorherigen Ansprüche, **dadurch gekennzeichnet,** daß eine Kartenfläche eine oder mehrere Löcher (7) oder Vertiefungen aufweist.

13. Karte nach Anspruch 12, **dadurch gekennzeichnet,** daß die Löcher (7) oder Vertiefungen in mindestens einer Reihe angeordnet sind.

14. Karte nach einem der vorherigen Ansprüche, **dadurch gekennzeichnet,** daß eine Kartenfläche eine wulstförmige Erhebung (17) aufweist.

15. Karte nach Anspruch 14, **dadurch gekennzeichnet,** daß die wulstförmige Erhebung (17) eine oder mehrere Krümmungen in Quer- und/oder Längsrichtung aufweist.

16. Karte nach einem der vorherigen Ansprüche, **dadurch gekennzeichnet,** daß die Querschnittskontur (16) des Kartenrandes eine Erweiterung und/oder Reduzierung aufweist, die formschlüssig in eine Abtastkontur des Schlosses paßt.

17. Schloß zur Aufnahme einer Karte (1) nach der vorherigen Ansprüche, **dadurch gekennzeichnet,** daß es ein (eine, einen) Abtaststift, -hebel, -fläche, -kontur, -rad, -zahnrad und/oder Schiebe- oder Schwenkstück aufweist, der (die, das) mit der Erweiterung (6) und/oder Reduzierung (7) zusammenarbeitet.

18. Karte nach einem der vorherigen Ansprüche, **dadurch gekennzeichnet,** daß auf der Karte zusätzlich ein Magnetstreifen ist, durch den Informationen über ein Schreib-/Lesegerät speicherbar und/oder abrufbar sind, das vorzugsweise an der Kasse oder am Eingang/Ausgang eines Geschäftes angeordnet ist.

19. Karte nach einem der vorherigen Ansprüche, **dadurch gekennzeichnet,** daß die Karte einen elektronischen Chip und/oder eine integrierte Schaltung aufweist.
